# EUROPÄISCHE PATENTSCHRIFT

(11) **EP 0 805 068 B1**
(45) Veröffentlichungstag und Bekanntmachung des Hinweises auf die Patenterteilung: **22.08.2001**
(21) Anmeldenummer: 97100175.5
(22) Anmeldetag: 08.01.1997
(51) Int. Cl.: B60R 9/04

(54) **Dachreling für Fahrzeuge**
Roof rails for vehicles
Rails de toit pour véhicules

(30) Priorität: 30.04.1996 DE 19617305
(43) Veröffentlichungstag der Anmeldung: 05.11.1997
(73) Patentinhaber: JAC Products Deutschland GmbH, 42285 Wuppertal (DE)
(72) Erfinder: Rothstein, Reinhold, Dr., 42279 Wuppertal (DE); Evels, Brigitte, 42119 Wuppertal (DE); Lumpe, Karl-Heinz, 45549 Sprockhövel (DE)

(56) Entgegenhaltungen:
- DE-A- 4 018 178
- DE-A- 4 315 688
- DE-A- 4 321 537

## Beschreibung

Die Erfindung bezieht sich auf eine Dachreling für Fahrzeuge der im Oberbegriff des Anspruchs 1 näher angegebenen Art.

Eine gattungsgemäße Dachreling ist in der DE 40 18 178 A1 gezeigt. Bei dieser bekannten Dachreling bestehen die Stützfüße jeweils aus einem unter Verwendung mindestens eines sich hindurcherstreckenden Befestigungselements an einer Fläche eines Fahrzeugs zu befestigenden Sockelteil und einer abnehmbar am Sockelteil befestigten, einen Stützkörper bildenden Abdeckung. Sowohl der Sockelteil als auch die Abdeckung sind Kunststoffkörper, wobei am Sockelteil als Versteifungskörper dienende Rippen angeformt sein können.

Durch die DE 32 30 346 A1 ist ein Stützfuß für eine Dachreling bekanntgeworden, der aus zwei zusammengesetzten spritzgegossenen Kunststoffkörpern besteht. Zumindest einer der Kunststoffkörper soll innere Aussparungen besitzen, die alle zur gleichen Längsseite hin offen und durch den anderen Kunststoffkörper geschlossen sind. Ob ein solcher Stützfuß den Stabilitätsanforderungen genügt, erscheint zumindest zweifelhaft.

Die DE 35 39 449 A1 bezieht sich auf eine Verbindung von Leichtmetallprofilen mit Anschlußelementen und zeigt einen mit einem Holm verbundenen Stützfuß einer Dachreling. Der Stützfuß besteht aus einem Kunststoff-Spritzgußteil mit einem darin eingelagerten gebogenen Rundbolzen als Versteifungskörper. Ob ein im Spritzguß eingelagerter Rundbolzen den Stabilitätsanforderungen zu genügen vermag, kann dahingestellt sein, denn bei dem Stützfuß erscheint es zumindest nachteilig, daß vor dem Spritzgießen desselben ein Versteifungskörper in das Formnest einer Spritzgießvorrichtung einzulegen ist.

Eine Dachreling mit einem spritzgegossenen Stützfuß aus Kunststoff mit einem darin eingelagerten Versteifungskörper ist ferner durch die DE 43 21 537 A1 bekanntgeworden. Der Versteifungskörper weist einen dreiteiligen Aufbau auf, was nachteilig für die Herstellung ist aber auch einen über die hohe Kante belastbaren Blechzuschnitt, was sich positiv auf die Stabilität des Stützfußes auswirkt. Andererseits muß aber auch beim Stützfuß der in dieser Druckschrift beschriebenen Art Einlegearbeit vor dem Spritzgießen geleistet werden mit einem entsprechend großen herstellungstechnischen Aufwand.

Der Erfindung liegt nun ausgehend von einer Dachreling der eingangs genannten Art die Aufgabe zugrunde, für diese einen Stützfuß zu schaffen, der sich durch geringes Gewicht, hohe Stabilität und besonders einfache und kostengünstige Herstellbarkeit auszeichnen soll.

Diese Aufgabe wird erfindungsgemäß mit den im Anspruch 1 angegebenen Merkmalen gelöst, während in den Unteransprüchen vorteilhafte Weiterbildungen und zweckmäßige Ausgestaltungen der Erfindung angegeben sind.

Die Dachreling weist nunmehr einen Stützfuß auf, der aus drei Teilen zusammengesetzt ist, von denen jedes einzelne besonders einfach und kostengünstig herstellbar und mit den jeweils anderen beiden Teilen zu verbinden ist. Der Kunststoffkörper ist ohne Einlegeteile problemlos zu fertigen, was bei der Herstellung kurze Taktzeiten ermöglicht und bei Massenartikeln wünschenswert ist. Gleiches gilt für die Herstellung des Kappenkörpers, der bevorzugterweise ebenfalls ein Kunststoff-Spritzling ist. Lediglich der den Stützfuß stabilisierende Versteifungskörper besteht aus Metall, wobei ein Blechzuschnitt eine besondere Formgebung, z. B. durch den Einsatz eines Folgewerkzeugs problemlos erhalten kann. Natürlich ist ein verformter Blechzuschnitt ein besonders preiswertes Bauteil, so daß der Stützfuß alles in allem sehr kostengünstig herzustellen ist und zudem den Vorteil einer hohen Belastbarkeit aufweist. Ein späteres Recyceln wird dadurch begünstigt, daß die Teile des Stützfußes problemlos sortenrein voneinander getrennt werden können.

Ein Ausführungsbeispiel der Erfindung wird im folgenden anhand der Zeichnungen näher erläutert und es zeigen:
- Fig. 1: eine Dachreling mit Stützfüßen und Holmen,
- Fig. 2: eine Seitenansicht eines Stützfußes,
- Fig. 3: eine Stirnansicht eines Stützfußes und

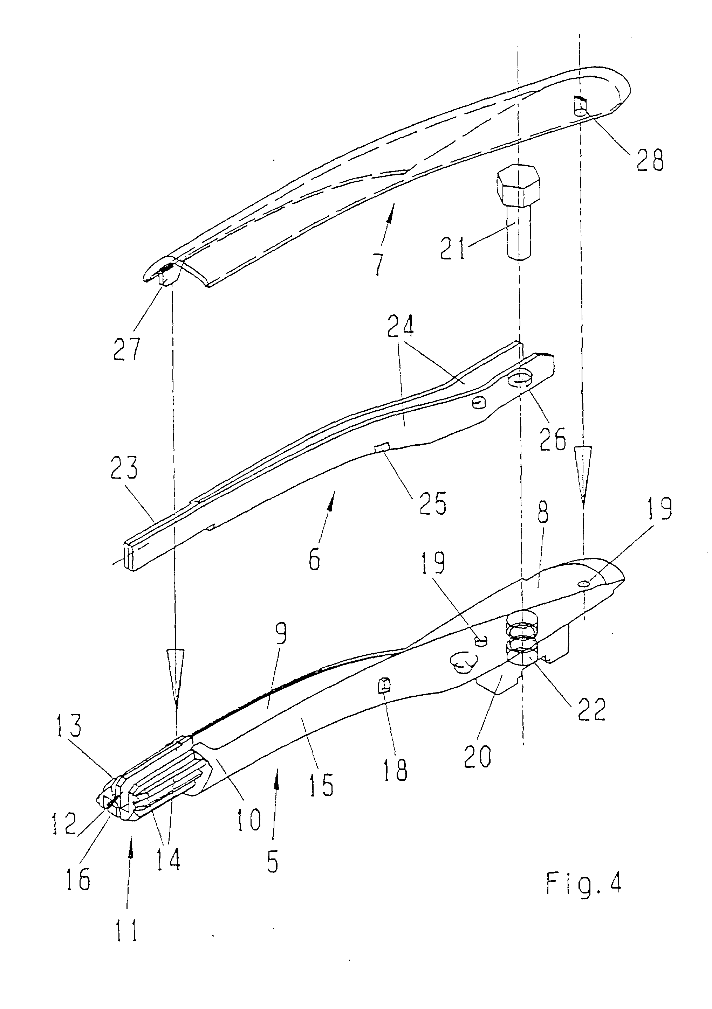

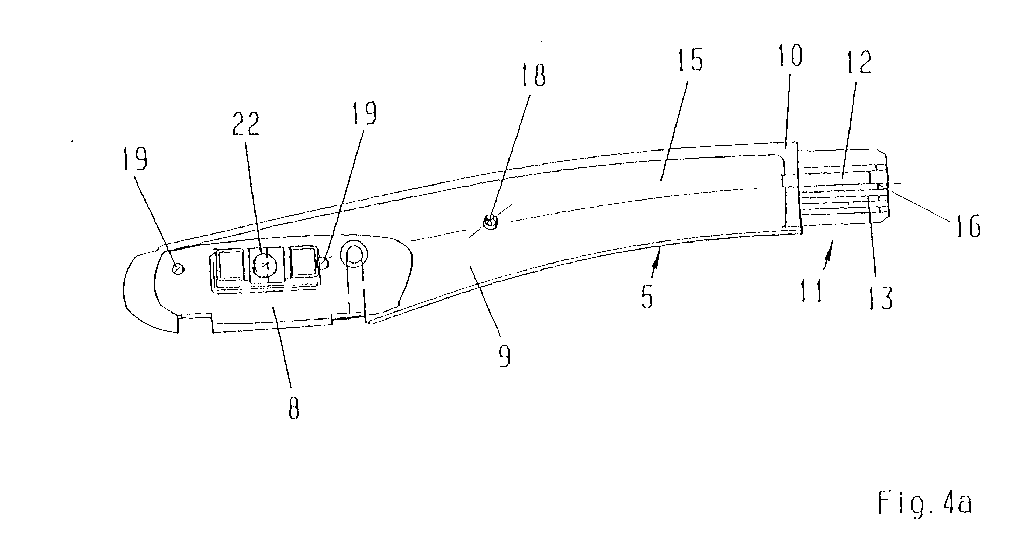

- Fig. 4: eine Explosionsdarstellung eines Stützfußes
- Fig. 4a: eine Einzelheit des Stützfußes.

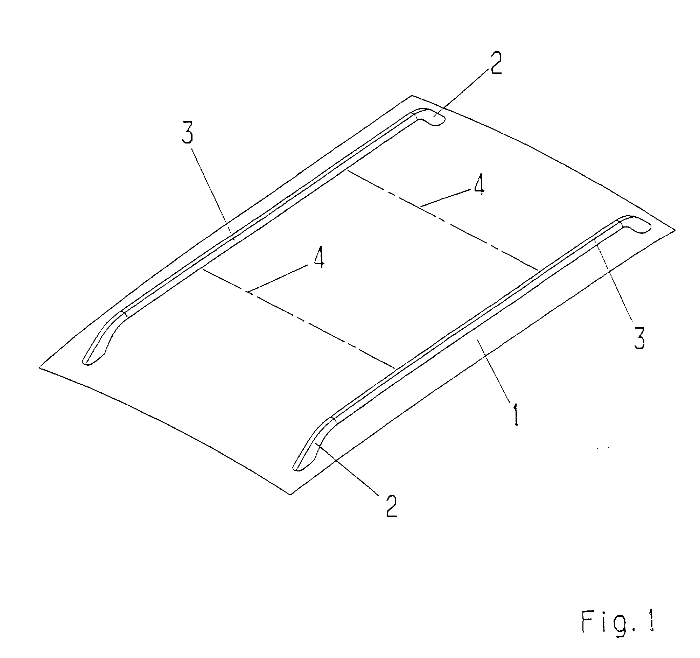

Fig. 1 läßt das Dachblech 1 eines Fahrzeugs mit einem darauf angeordneten Dachlastenträger erkennen. Der Dachlastenträger wird aus zwei Dachrelings, bestehend aus Stützfüßen 2 und Holmen 3 sowie aus lediglich strichpunktiert angedeuteten Querträgern 4, die an den Holmen 3 befestigt sind, gebildet. Die Dachrelings erstrecken sich zumindest annähernd parallel zueinander und verlaufen in Fahrtrichtung des Fahrzeugs.

Jeder Stützfuß 2 besteht im wesentlichen aus einem Kunststoffkörper 5, einem Versteifungskörper 6 und einem Kappenkörper 7.

Der Kunststoffkörper 5 weist eine Auflageplatte 8 auf, die sich auf dem Dachblech 1 abstützt. An die Auflageplatte 8 schließt sich in axialer Richtung eine bogenförmig ansteigende erste Wand 9 an, die an einer senkrecht zur Auflageplatte 8 ausgerichtete Stirnwand 10 endet. Von der Stirnwand 10 geht ein in ein Holmende einführbarer Zapfen 11 aus. Der Zapfen 11 besitzt eine erste axial durchlaufende und nach oben offene Nut 12 und eine zu dieser parallel verlaufende zweite nach oben offene Nut 13. Weitere axial durchlaufende Nuten 14 verleihen dem Zapfen 11 Federungseigenschaften in radialer Richtung zur wackelfreien Halterung im Holm 3. Vom freien Ende der Auflageplatte 8 bis zur Stirnwand 10 verläuft eine mit der ersten Wand 9 einen weichen bogenförmigen Übergang bildende Seitenwand 15, so daß der Kunststoffkörper 5 einen L-förmigen Querschnitt besitzt. Der Kunststoffkörper 5 weist ferner am freien Endbereich des Zapfens 11 eine hinterschnittene Nase 16 auf, die in eine Holmöffnung 17 einzurasten vermag. Ein auf der körpers 6 am Kunststoffkörper 5, während Löcher 19 in der Auflageplatte 8 zur Festlegung des Kappenkörpers 7 bestimmt sind.

An der Unterseite der Auflageplatte 8 ist ein quaderförmiger Ansatz 20 angeformt. Durch die Auflageplatte 8 und dem Ansatz 20 erstreckt sich eine Bohrung zum Durchführen einer Befestigungsschraube 21. Innerhalb der Bohrung ist eine Metallbuchse 22 angeordnet, die einem Fließverhalten des Kunststoffkörpers 5 unter Belastung entgegenwirkt.

Der Versteifungskörper 6 ist ein langgestrecktes aus einem Blechzuschnitt gebildetes Formteil mit einem U-förmigen Querschnitt über nahezu die gesamte Länge. Lediglich an einem Endbereich 23 liegen die Schenkel 24 abstandsfrei aneinander, während die Schenkel 24 ansonsten über einen Steg miteinander verbunden sind. Eine Öffnung 25 im Versteifungskörper 6 dient zum Durchführen des Zapfens 18 am Kunststoffkörper 5 und eine Bohrung 26 zum Durchführen der Befestigungsschraube 21.

Der Versteifungskörper 6 wird mit dem Kunststoffkörper 5 durch bloßes Auflegen verbunden. Dabei stützt sich der Endbereich 23 in der Nut 12, der andere Endbereich auf der Auflageplatte 8 und der übrige Bereich auf der ersten Wand 9 ab. Der Zapfen 18 durchsetzt die Öffnung 25, wobei vorgesehen werden kann, den Zapfen 18 zwecks Herstellung einer Klipsverbindung mit einem nichtgezeigten Pilzkopf auszubilden. Es ist aber auch denkbar, am Zapfen 18 durch thermisches Beaufschlagen einen Nietkopf anzuformen.

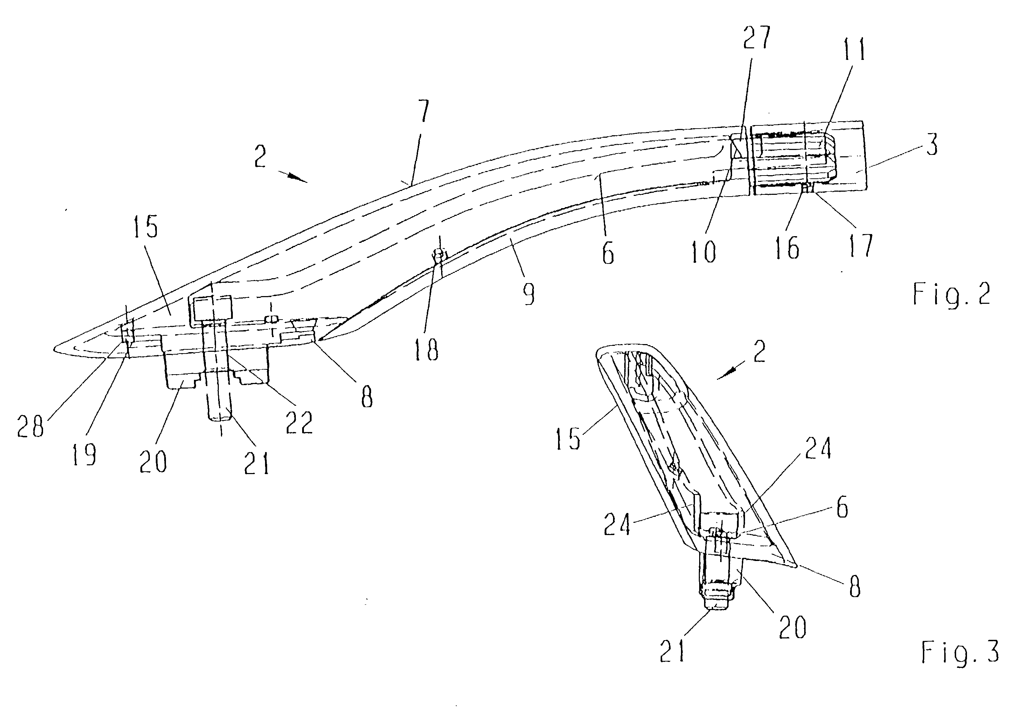

Der Kappenkörper 7 ist mit dem Kunststoffkörper 5 verbunden, um den Versteifungskörper 6 abzudecken und dem Stützfuß 2 ein massives Aussehen zu verleihen. Der Kappenkörper 7, vorzugsweise ein Kunststoffspritzling, ist der Formgebung des Kunststoffkörpers 5 angepaßt und weist einendig einen Ansatz 27 auf, der in die Nut 13 am Zapfen 11 einzuführen ist. Damit ist der Kappenkörper 7 nach der Montage des Stützfußes 2 am Holm 3 festgelegt, was in Fig. 2 besonders deutlich gezeigt ist. Am dem Ansatz 27 abgewandten Endbereich weist der Kappenkörper 7 ein Klipselement 28 auf, zum Eingriff in ein Loch 19 am Kunststoffkörper 5. Erforderlichenfalls ist die Anordnung weiterer Klipsverbindungen vorzusehen.

## Patentansprüche

1. Dachreling für Fahrzeug mit einem Holm (3) und Stützfüßen (2) an den Holmenden, die an einem Fahrzeugdach (1) befestigbar sind und den Holm (3) in einer vom Fahrzeugdach (1) beabstandeten Position tragen, wobei
- jeder Stützfuß (2) aus einem spritzgegossenen Kunststoffkörper (5), einem Versteifungskörper (6) und einem den Versteifungskörper (6) abdeckenden Kappenkörper (7) besteht,
- der Kunststoffkörper (5) eine ebene sich auf dem Fahrzeugdach (1) abstützende Auflageplatte (8) aufweist,
- die Auflageplatte (8) sich in axialer Richtung in eine bogenförmig ansteigende erste Wand (9) fortsetzt, die an einer senkrecht zur Auflageplatte (8) ausgerichteten Stirnwand (10) endet,
- von der Stirnwand (10) ein in ein Holmende überführbarer Zapfen (11) ausgeht,
- vom freien Ende der Auflageplatte (8) bis zur Stirnwand (10) eine mit der ersten Wand (9) einen weichen bogenförmigen Übergang bildende Seitenwand (15) verläuft, so daß der Kunststoffkörper (5) von der Auflageplatte (8) bis hin zur Stirnwand (10) einen L-förmigen Querschnitt besitzt,
- der Versteifungskörper (6) am auflageplattenseitigen Endbereich eine sich durch die Auflageplatte (8) fortsetzende Bohrung (26) zum Durchführen einer Befestigungsschraube (21) zum Festlegen des Stützfußes (2) am Fahrzeugdach (1) aufweist, und wobei
- der Kappenkörper (7) eine der Form des Kunststoffkörpers (5) angepaßte Gestaltung besitzt und diesen vom freien Ende der Auflageplatte (8) bis einschließlich der Stirnwand (10) überdeckt und ferner Klipselemente (28) zur Festlegung am Kunststoffkörper (5) und/oder am Versteifungskörper (6) aufweist,
dadurch gekennzeichnet, daß
- der Zapfen (11) eine erste nach oben offene Axialnut (12), die auch die Stirnwand (10) durchsetzt und eine zweite dazu parallel ausgerichtete nach oben offene Axialnut (13) aufweist,
- der Versteifungskörper (6) ein Metallkörper ist und aus einem verformten Blechzuschnitt besteht, der sich mit einem ersten Endbereich auf der Auflageplatte (8), mit dem anderen Endbereich (23) in der ersten Axialnut (12) und im übrigen auf der ersten Wand (9) abstützt,
- der Versteifungskörper (6) über seine axiale Erstreckung einen U-förmigen Querschnitt mit zwei über einen Steg miteinander verbundenen Schenkel (24) besitzt mit Ausnahme des in die erste Axialnut (12) eingreifenden Endbereichs (23), bei dem die Schenkel (24) abstandsfrei aneinanderliegen und daß
- der Kappenkörper (7) einen überstehenden Ansatz (27) aufweist, welcher im Bereich der Stirnwand (10) in die zweite Axialnut (13) des in ein Holmende einführbaren Zapfen (11) eingreift.

2. Dachreling nach Anspruch 1, dadurch gekennzeichnet, daß der Kunststoffkörper (5) angeformte Zapfen (18) mit Pilzköpfen aufweist, die im Versteifungskörper (6) vorgesehen Öffnungen (25) durchsetzen.

3. Dachreling nach Anspruch 1 oder 2, dadurch gekennzeichnet, daß die Auflageplatte (8) unterseitig einen quaderförmigen, in eine Dachvertiefung, wie Nut eingreifenden Ansatz (20) aufweist, in der die sich fortsetzende Bohrung (26) befindet, welche eine darin eingesetzte Metallbuchse (22) aufweist.

4. Dachreling nach wenigstens einem der Ansprüche 1 bis 3, dadurch gekennzeichnet, daß sich über den Zapfen (11) mehrere zusätzliche Axialnuten (14) erstrecken.

5. Dachreling nach wenigstens einem der Ansprüche 1 bis 4, dadurch gekennzeichnet, daß am Zapfen (11) eine in eine Holmöffnung (17) einrastbare Nase (16) angeformt ist.

## Claims

1. Roof rail for a vehicle with a spar (3) and supporting feet (2) at the ends of the spar that can be fixed to a vehicle roof and support the spar (3) in a position at a distance from the vehicle roof (1),
- each supporting foot (2) comprising an injection-moulded plastic body (5), a reinforcing body (6) and a cap body (7) that covers the reinforcing body (6),
- the plastic body (5) having a flat bearing plate (8) that rests on the vehicle roof (1),
- the bearing plate (8) continuing in the axial direction into a first wall (9) that rises in an arc and ends at an end wall (10) aligned perpendicular to the bearing plate (8),
- a stud (11) that can be inserted into one end of the spar emanating from the end wall (10),
- a side wall (15) that forms a gentle arcuate transition with the first wall (9) extending from the free end of the bearing plate (8) to the end wall (10), with the result that the plastic body (5) has an L-shaped cross section from the bearing plate (8) to the end wall (10),
- the reinforcing body (6) having in the end region adjacent to the bearing plate a hole (26) which continues through the bearing plate (8) and is intended to allow the passage of a fixing screw (21) for fixing the supporting foot (2) on the vehicle roof (1), and
- the cap body (7) having a shape that matches the shape of the plastic body (5) and covering the latter from the free end of the bearing plate (8) up to and including the end wall (10), and furthermore having clip elements (28) for fixing on the plastic body (5) and/or on the reinforcing body (6),
characterized in that
- the stud (11) passes through a first upwardly open axial groove (12) that also passes through the end wall (10) and has a second upwardly open axial groove (13) aligned parallel thereto,
- the reinforcing body (6) is a metal body and comprises a deformed sheet-metal blank, which is supported on the bearing plate (8) by a first end region and is supported in the first axial groove (12) by the other end region (23) and is otherwise supported on the first wall (9),
- the reinforcing body (6) has a U-shaped cross section over its axial length, with two limbs (24) connected to one another by a web, with the exception of the end region (23) engaging in the first axial groove (12), in which the limbs (24) rest against one another without a clearance, and in that
- the cap body (7) has a projecting lug (27) that engages in the region of the end wall (10) in the second axial groove (13) of the stud (11) that can be introduced into one end of the spar.

2. Roof rail according to Claim 1, characterized in that the plastic body (5) has integrally formed studs (18) with mushroom heads that pass through openings (25) provided in the reinforcing body (6).

3. Roof rail according to Claim 1 or 2, characterized in that the bearing plate (8) has on the underside a cuboidal lug (20) that engages in a roof recess, such as a groove, and in which is located the continuing hole (26), which has a metal bushing (22) inserted in it.

4. Roof rail according to at least one of Claims 1 to 3, characterized in that a plurality of additional axial grooves (14) extend over the stud (11).

5. Roof rail according to at least one of Claims 1 to 4, characterized in that a nose (16) that can be latched into an opening (17) in the spar is formed integrally on the stud (11).

## Revendications

1. Galerie de toit pour véhicule avec un longeron (3) et des pieds d'appui (2) aux extrémités du longeron, qui peuvent être fixés à un toit de véhicule (1) et supportent le longeron (3) dans une position écartée du toit du véhicule (1), dans laquelle
- chaque pied d'appui (2) se compose d'un corps de plastique moulé par injection (5), d'un corps de renforcement (6) et d'un corps de recouvrement (7) couvrant le corps de renforcement (6),
- le corps de plastique (5) présente une plaque d'appui plane (8) s'appuyant sur le toit du véhicule (1),
- la plaque d'appui (8) se prolonge en direction axiale en une première paroi (9) montante en forme d'arc, qui se termine par une face d'extrémité (10) orientée perpendiculairement à la plaque d'appui (8),
- un tenon (11) à insérer dans une extrémité de longeron sort de la face d'extrémité (10),
- une paroi latérale (15) formant une transition douce en forme d'arc avec la première paroi (9) va de l'extrémité libre de la plaque d'appui (8) jusqu'à la face d'extrémité (10), de telle façon que le corps de plastique (5) possède une section transversale en L depuis la plaque d'appui (8) jusqu'à la face d'extrémité (10),
- le corps de renforcement (6) présente, dans sa région d'extrémité du côté de la plaque d'appui, un alésage (26) se prolongeant à travers la plaque d'appui (8) pour le passage d'une vis de fixation (21) destinée à caler le pied d'appui (2) sur le toit du véhicule (1), et dans laquelle
- le corps de recouvrement (7) possède une configuration adaptée à la forme du corps de plastique (5) et recouvre celui-ci de l'extrémité libre de la plaque d'appui (8) jusque et y compris la face d'extrémité (10) et présente en outre des organes de clippage (28) pour la fixation au corps de plastique (5) et/ou au corps de renforcement (6),
caractérisée en ce que
- le tenon (11) présente une première rainure axiale (12) ouverte vers le haut, qui traverse aussi la face d'extrémité (10) et une deuxième rainure axiale (13) ouverte vers le haut et orientée parallèlement à celle-ci,
- le corps de renforcement (6) est un corps métallique et se compose d'un coupon de tôle déformé, qui s'appuie par une première région d'extrémité sur la plaque d'appui (8), par l'autre région d'extrémité (23) dans la première rainure axiale (12) et pour le reste sur la première paroi (9),
- le corps de renforcement (6) présente, sur sa dimension axiale, une section transversale en U avec deux branches (24) reliées l'une à l'autre par une âme, à l'exception de la région d'extrémité (23) engagée dans la première rainure axiale (12), pour laquelle les branches (24) sont appliquées l'une contre l'autre sans écartement, et en ce que
- le corps de recouvrement (7) présente une languette en saillie (27), qui s'engage dans la région de la face d'extrémité (10) dans la deuxième rainure axiale (13) du tenon (11) à insérer dans une extrémité de longeron.

2. Galerie de toit suivant la revendication 1, caractérisée en ce que le corps de plastique (5) présente des tenons façonnés (18) avec des têtes en forme de champignons, qui traversent des ouvertures (25) prévues dans le corps de renforcement (6).

3. Galerie de toit suivant la revendication 1 ou 2, caractérisée en ce que la plaque d'appui (8) présente, sur sa face inférieure, une saillie parallélépipédique (20) s'engageant dans un creux du toit, comme une rainure, dans laquelle se trouve l'alésage prolongé (26), qui présente une douille métallique (22) insérée intérieurement.

4. Galerie de toit suivant au moins l'une des revendications 1 à 3, caractérisée en ce que plusieurs rainures axiales supplémentaires (14) s'étendent sur le tenon (11).

5. Galerie de toit suivant au moins l'une des revendications 1 à 4, caractérisée en ce qu'un ergot (16) verrouillable dans une ouverture (17) du longeron est façonné sur le tenon (11).
